Europäisches Patentamt

European Patent Office

Office européen des brevets

(11) Veröffentlichungsnummer : **0 121 885**
**B1**

(12) **EUROPÄISCHE PATENTSCHRIFT**

(45) Veröffentlichungstag der Patentschrift :
09.09.87

(21) Anmeldenummer : 84103612.2

(22) Anmeldetag : 02.04.84

(51) Int. Cl.⁴ : **G 01 N 3/56**

(54) **Vorrichtung zum Messen der Qualität von Pellets.**

(30) Priorität : 11.04.83 DE 3312942

(43) Veröffentlichungstag der Anmeldung :
17.10.84 Patentblatt 84/42

(45) Bekanntmachung des Hinweises auf die Patenterteilung : 09.09.87 Patentblatt 87/37

(84) Benannte Vertragsstaaten :
AT BE CH DE FR GB IT LI NL SE

(56) Entgegenhaltungen :
EP-A- 0 085 507
CH-A- 490 672
FR-A- 2 393 293
US-A- 1 459 143
"Mühlen- und Mischfutterjahrbuch 1978/79"; Müller-
Taschenbuch, Verlag M. Schäfer Detmold, Seiten
162-169

(73) Patentinhaber : Amandus Kahl Nachf. (GmbH & Co.)
Dieselstrasse 5
D-2057 Reinbek (DE)

(72) Erfinder : Behrmann, Joachim
v. Anckeln-Strasse 12
D-2050 Hamburg 80 (DE)
Erfinder : Krausler, László
Hermann-Körner-Strasse 27
D-2057 Reinbek (DE)

(74) Vertreter : Glawe, Delfs, Moll & Partner Patentanwälte
Rothenbaumchaussee 58 Postfach 2570
D-2000 Hamburg 13 (DE)

## Beschreibung

Die Erfindung betrifft eine Vorrichtung zum Messen der Qualität von Pellets mit einer Kammer, mit einem Hohlraum zum Aufnehmen des zu untersuchenden Materials und mit einem Antrieb, der Kammer und Hohlraum derart bewegt, daß ein Abrieb der Pellets verursacht wird.

Vorrichtungen dieser Art dienen zum Messen und Prüfen der Qualität von Pellets oder Granulatteilchen, die durch Verpressen von mehl- oder pulverförmigem Material hergestellt worden sind. Solche Pellets finden vielfach Anwendung, zum Beispiel in der Futtermittelindustrie, als Brennstoff und für andere Zwecke. Es ist dabei immer wichtig, festzustellen, welche Qualität die Pellets haben, insbesondere wie unempfindlich sie gegen Abrieb sind. Je größer nämlich der Abrieb ist, um so mehr werden die Pellets im Laufe ihrer Handhabung, ihrer Lagerung und ihres Transportes allmählich wieder zu pulver- oder mehlförmigem Material, so daß sie die güstigen Eigenschaften, die sie durch ihre Pelletform hatten, allmählich zumindest teilweise verlieren.

Um nun die Abriebfestigkeit zu messen, ist es bekannt (siehe « Mühler- und Mischfutterjahrbuch 1978/79 », Müllertaschenbuch, Verlag Moritz Schäfer Datenold, Seiten 162-169), von Pulver und/oder Mehl befreite Pellets eine gewisse Zeit in einer bewegten Kammer aufzubewahren, die gedreht, gerüttelt oder dergleichen wird. Nach einer gewissen Zeit wird dann das in der Kammer befindliche Material gesiebt, um den durch Abrieb erzeugten Mehl- oder Pulveranteil abzutrennen. Pulveranteil und Anteil der verbliebenen Pellets werden separat gewogen ; das Verhältnis der Gewichte ist dabei ein Maß für die Qualität. Als Beispiel für eine solche Messung sei hier das Verfahren nach PFOST genannt, bei dem die Pellets in einen rechteckigen Kasten mit den Abrieb vergrößernden Vorsprüngen eingebracht werden. Der Kasten wird dann für eine vorgeschriebene Zeit um eine im wesentlichen horizontale Achse gedreht.

Der Nachteil solcher Abriebfestigkeitsbestimmungen, die immer wesentlich für die Qualitätsbestimmung der Pellets sind, besteht darin, daß die Messung sehr viel Zeit erfordert. Außerdem steht das Meßergebnis nur diskontinuierlich und immer erst dann zur Verfügung, wenn eine Probe eine gewisse Zeit in der Kammer bewegt wurde. Dies ist zum Beispiel nachteilig, wenn man die Daten der Pelletqualität sofort zum Steuern der die Pellets erzeugenden Presse verwenden will.

Die Aufgabe der Erfindung besteht darin, eine Vorrichtung der eingangs genannten Art so zu verbessern, daß die Qualität der Pellets laufend und kontinuierlich sowie automatisch gemessen werden kann.

Die erfindungsgemäße Lösung besteht darin, daß die Kammer mit die Bewegung des Materials in einer Längsrichtung der Kammer hemmenden Zwischenwänden und mit Einrichtungen zum Einbringen eines Pelletstroms durch eine in Längsrichtung vordere Öffnung der Kammer und zum Abgeben des Pelletstroms durch eine hintere Öffnung versehen ist, und daß Einrichtungen zum Aussieben und Wegleiten der mehl- oder pulverförmigen Komponente des Pelletstroms vor bzw. im Bereich der vorderen Öffnung der Kammer und hinter bzw. im Bereich der hinteren Öffnung der Kammer, und Einrichtungen zur laufenden Mengenbestimmung des aus der Kammer abgegebenen von der mehl- oder pulverförmigen Komponente befreiten Pelletstroms oder der hinter bzw. im Bereich der hinteren Öffnung der Kammer ausgesiebten und weggeleiteten mehl- oder pulverförmigem Komponente, die durch Abrieb entstanden ist, vorgesehen sind.

Es wird also in die Kammer laufend neues pelletförmiges Material In Form eines Pelletstroms eingebracht. Am Eingang der Kammer bzw. vor dem Eingang wird dabei die mehl- oder pulverförmige Komponente abgesiebt, so daß die Pellets frei von Mehl oder Pulver in die Kammer eintreten. In der Kammer findet dann laufend Abrieb statt, wobei die Pellets allmählich von vorne nach hinten durch die Kammer wandern. Am hinteren Ende der Kammer findet dann wieder eine Aussiebung der mehl- oder pulverförmigen Komponente statt. Sowohl diese pulverförmige Komponente als auch die verbleibenden Pellets am Ausgang werden zum Beispiel gewogen ; das Gewichtsverhältnis ist das gewünschte Maß für die Qualität.

Die Mengenbestimmung kann dabei durch eigentliches Wiegen, in automatischen Waagen, kontinuierlich mit einer Bandwaage, mit einer Prallplattenwaage oder anderen Maßnahmen durchgeführt werden, die an sich bekannt sind. Man wird dabei kontinuierliche Meßverfahren vorziehen, wenn man möglichst kontinuierlich über die Pelletqualität orientiert sein möchte.

Die Vorrichtung ist vorteilhafterweise noch mit einer Einrichtung zum Bestimmen der Temperatur der Pellets und/oder einer Einrichtung zum Bestimmen der Feuchtigkeit der Pellets versehen, damit auch diese Parameter gleichzeitig mit der Abriebfestigkeit bestimmt und falls gewünscht angezeigt oder für die Steuerung einer Anlage verwendet werden können. Da sich diese Parameter möglicherweise in der Abriebkammer ändern, ist vorteilhafterweise die Einrichtung zum Bestimmen von Temperatur und/oder Feuchtigkeit in Strömungsrichtung vor der Kammer angeordnet.

Die Kammer könnte zum Beispiel hin- und herbewegt werden. Eine besonders einfache und vorteilhafte Ausführungsform zeichnet sich dadurch aus, daß die Kammer um eine sich in ihrer Längsrichtung erstreckende Achse drehbar ist. Die Zwischenwände in der Kammer können dabei eine solche Form haben, daß sie allmählich die Pellets und das Abriebmaterial vom Einlaß der Kammer zum Auslaß leiten. Diese Bewegung kann jedoch auch dadurch erreicht werden, daß die Achse vom Bereich der vorderen Öffnung zum Bereich der hinteren Öffnung der Kammer nach unten geneigt ist.

Durch beide Maßnahmen wird erreicht, daß sich die Pellets allmählich von vorne nach hinten bewegen. Die Durchlaufgeschwindigkeit der Einzelpellets durch die Kammer wird dabei keinen genau definierten Wert haben, sondern eine statistische Verteilung, in der auch sehr lange und sehr kurze Durchlaufzeiten auftreten. Aufgrund dieser Tatsache wird eine Änderung der Abriebfestigkeit der Pellets, die in die Vorrichtung eingeführt werden, sehr schnell als Ausgangssignal bemerkbar, und zwar schon vor einem Zeitintervall, das der mittleren Durchlaufzeit durch die Kammer entspricht.

Der Hohlraum der Kammer kann mit Vorsprüngen zur Vergrößerung des Abriebs der Pellets bei der Bewegung der Kammer versehen sein. Die Kammer kann insbesondere aus mehreren hintereinander angeordneten und miteinander verbundenen Einzelkammern bestehen, wodurch dann ähnliche Verhältnisse wie bei der vorbekannten von Hand durchzuführenden Messung nach PFOST erreicht werden können und vergleichbare Meßwerte erzielt werden können.

Ein weiterer Parameter für die Qualität der Pellets ist die Härte. Eine vorteilhafte erfindungsgemäße Vorrichtung zeichnet sich daher dadurch aus, daß sie eine automatische Härtemeßeinrichtung für aus dem Pelletstrom ausgesonderte Einzelpellets aufweist. Dabei ist vorteilhafterweise die Härtemeßeinrichtung hinter der Abriebmeßeinrichtung angeordnet.

Die Härtemeßeinrichtung kann eine hin- und herbewegbare Rinne für die Pellets, die mit einer Kerbe zum Festhalten eines einzelnen Pellets versehen ist, einen Preßstempel oberhalb und eine Kraftmeßeinrichtung unterhalb der Rinne im Bereich der Kerbe aufweisen. Dabei kann insbesondere die Kraftmeßeinrichtung eine Kraftmeßdose sein. Diese Härtemeßeinrichtung arbeitet wie folgt.

Durch die Rinne, die zum Beispiel in eine Rüttelbewegung versetzt wird, werden die Pellets auf der Rinne so lange weiterbewegt, bis ein Pellet in die Kerbe eingedrungen ist und sie ausfüllt. Es wird dann jeweils nach einer vorgegebenen Zeit die Rüttelbewegung der Rinne angehalten. Anschließend drückt der Preßstempel von oben auf das einzelne Pellet mit allmählich anwachsender Kraft, die mit der Kraftmeßdose, gemessen wird. Zerbricht schließlich das Pellet, so geht die auf die Kraftmeßdose ausgeübte Kraft plötzlich zurück ; die unmittelbar vorher gemessene Kraft ist ein Maß für die Härte des Pellets.

Bevor oder wenn die Rinne wieder in die Rüttelbewegung versetzt wird, werden vorteilhafterweise pneumatische Einrichtungen zum Beseitigen der zerdrückten Pellets aus der Kerbe eingeschaltet.

Die Meßwerte für Temperatur, Feuchtigkeit, Abriebfestigkeit und Härte können automatisch ausgewertet werden, wobei auch gleich Mittelwerte berechnet und angezeigt oder ausgedruckt werden können. Diese Werte können nicht nur zur momentanen Unterrichtung von Bedienungspersonen dienen, sondern auch für spätere Verwendung festgehalten werden, so daß auch nach längerer Zeit noch die Qualität von Pellets bei ihrer Herstellung festgestellt werden kann. Die Daten können aber auch sofort zur Steuerung von Produktionseinrichtungen, zum Beispiel Pelletpressen, verwendet werden, wobei dann Arbeitsparameter der Presse oder Materialzugaben am Eingang dieser Pressen (zum Beispiel in Form von Dampf, Fett usw.) so geregelt werden, daß eine optimale Pelletqualität erhalten wird. Um hier eine besonders schnelle Regelung zu erhalten, wird man die erfindungsgemäße Vorrichtung vorteilhafterweise unmittelbar hinter der Pelletpresse und noch vor dem Pelletkühler vorsehen. Die mit der erfindungsgemäßen Vorrichtung gewonnenen Meßwerte könnten dann auch zur Steuerung des nachfolgenden Kühlers dienen.

Vorteilhafterweise ist die Anordnung so getroffen, daß gleichzeitig die Daten von gleichzeitig in die Vorrichtung eingebrachten Pellets ausgedruckt werden. Dadurch wird der Nachteil vermieden, daß verschiedene Eigenschaften zu verschiedenen Zeiten gemessen werden. So wird die Temperatur und Feuchtigkeit eines Pellets zum Beispiel beim Eintreten in die Vorrichtung, die Härte erst beim Austreten durch die Vorrichtung, das heißt nach Durchlaufen der Abriebstrecke gemessen und angezeigt.

Die Erfindung wird im folgenden beispielsweise anhand von vorteilhaften Ausführungsformen unter Bezugnahme auf die beigefügten Zeichnungen beschrieben. Es zeigen :

Figur 1  in schematischer Darstellung den Aufbau einer vorteilhaften besonders vielseitig einsetzbaren erfindungsgemäßen Vorrichtung ;

Figur 2  in schematischer Darstellung den Aufbau der Abriebmeßeinrichtung der erfindungsgemäßen Vorrichtung ; und

Figur 3  in schematischer Darstellung den Aufbau der Härtemeßeinrichtung der erfindungsgemäßen Vorrichtung.

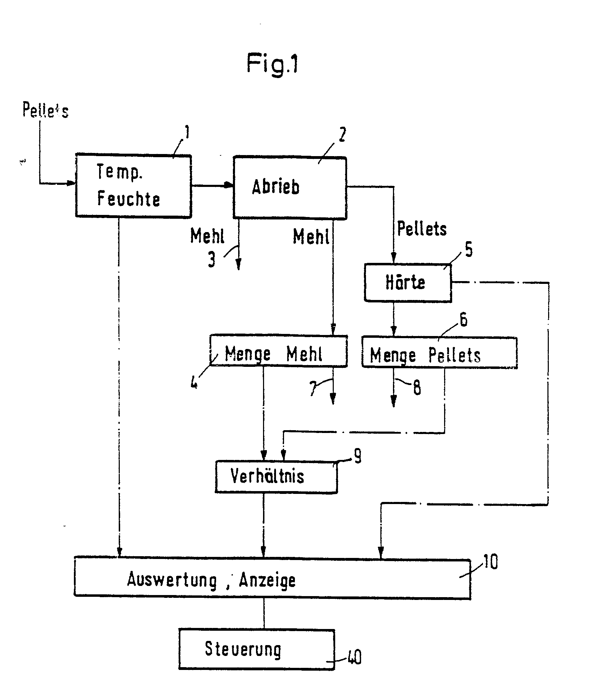

Wie in Fig. 1 schematisch dargestellt ist, werden die Pellets zunächst einer Meßeinrichtung 1 für Temperatur und für Feuchtigkeit zugeführt. Anschließend werden sie dann in eine Abriebmeßeinrichtung 2 weitergeleitet, in der sie in einer Kammer einem Abrieb unterworfen werden. Bereits am Eingang dieser Abriebmeßeinrichtung 2 wird der vorher schon vorhandene mehlförmige Anteil ausgesiebt und in Richtung des Pfeiles 3 abgeleitet.

Am Ausgang der Abriebeinrichtung 2 wird die durch den Abrieb erzeugte mehlförmige Komponente ausgesiebt und einer Meßeinrichtung 4 für die Mehlmenge zugeführt. Die Pellets werden dagegen zunächst einer Härtemeßeinrichtung 5 und anschließend einer Meßeinrichtung 6 für die Bestimmung der Pelletmenge zugeführt. Die die Mengenbestimmungseinrichtungen 4 und 6 verlassenden Mehl- und Pelletströme, die durch Pfeile 7 und 8 angedeutet sind, werden ebenso wie das in Richtung des Pfeiles 3 die Abriebeinrichtung verlassende Mehl einem Abfallreservoir oder der Wiederverwendung zugeführt ; das weitere Schicksal dieses Materials ist hier nicht von Interesse.

Die in den Meßeinrichtungen 1, 4, 5 und 6 bestimmten Größen werden nun auf den strichpunktiert gezeichneten Wegen weiterverarbeitet. So wird aus der Mehlmenge des Mengenmessers 4 und der Pelletmenge des Mengenmessers 6 in einer Schaltung 9 das Verhältnis dieser Mengen gebildet, das ein Maß für die Abriebfestigkeit ist. Die Daten über Temperatur, Feuchte, Härte und das letztgenannte Verhältnis werden dann einer Einrichtung 10 zugeführt, in der diese Daten ausgewertet und angezeigt werden. Falls dies gewünscht ist, können die Daten auch für spätere Verwendung ausgedruckt werden.

Die Daten können aber auch zur Steuerung der Pelletproduktion verwendet werden, indem die erfindungsgemäße Vorrichtung unmittelbar hinter einer Pelletpresse angeordnet wird und zur Steuerung der Eingangsdaten (zum Beispiel Dampf, Wasser, usw.) oder sonstigen Parametern der Presse verwendet wird. Da sich die Pelletqualität im nachfolgenden Kühler noch ändert, könnte die erfindungsgemäße Vorrichtung auch erst hinter dem Pelletkühler vorgesehen sein, was aber den Nachteil hat, daß die Regelzeit um die Verweilzeit im Kühler vergrößert wird.

Es ist aber auch denkbar, die Pellets nach dem Verlassen der Presse nur sehr kurz zu kühlen, um dann sowohl die Vorgänge vor und in der Presse noch rechtzeitig zu beeinflussen, als auch den weiteren Kühlvorgang zu steuern. Dieses kann dadurch geschehen, daß ein Vorkühler zwischengeschaltet wird oder daß an beliebiger Stelle aus dem eigentlichen Hauptkühler ein Produktteilstrom entnommen wird.

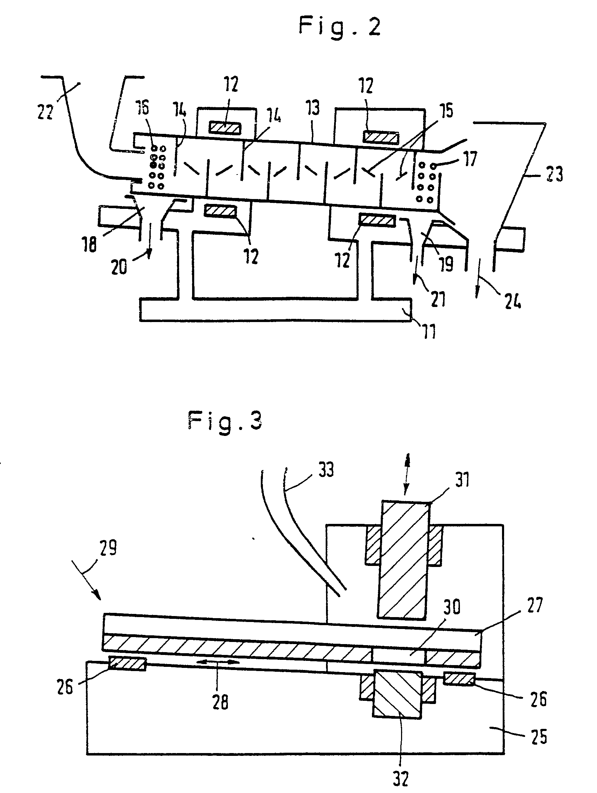

In Fig. 2 ist die Abriebeinrichtung 2 im Detail dargestellt. Auf einem Maschinengestell 11 ist mit Hilfe von Lagern 12 eine Kammer 13 drehbar befestigt, die durch einen nicht gezeigten Antrieb in Drehbewegung versetzt werden kann. Die Drehachse verläuft dabei von links nach rechts in der Fig. 2, in der Richtung des Pelletstroms leicht abschüssig. Die Kammer 13 ist dabei mit Zwischenwänden 14 versehen, die den Pelletstrom hemmen, aber nicht verhindern sollen. Außerdem ist die Kammer mit Vorsprüngen 15 versehen, durch die der Abrieb vergrößert werden soll.

An der Einlaß- und Auslaßöffnung der Kammer weist die Wandung derselben Siebbereiche 16 bzw. 17 auf, durch die mehlförmiges Material austreten kann und über Trichter 18 bzw. 19 in Richtung der Pfeile 20 bzw. 21 weggeführt werden kann. Der Anteil des ursprünglich in den Trichter 22 eingeführten pelletförmigen Materials, der die Kammer 13 pelletförmig verläßt, wird von einem Trichter 23 aufgefangen und in Richtung des Pfeiles 24 abgeleitet.

Die Mengen der in Richtung des Pfeiles 21 abgeleiteten mehlförmigen Komponente und die Menge des in Richtung des Pfeiles 24 abgeleiteten Pelletanteils können dann mit entsprechenden Einrichtungen, zum Beispiel Waagen, bestimmt werden. Aus dem Verhältnis der Anteile kann dann eine Aussage über die Qualität der Pellets gemacht werden.

In Fig. 3 ist schematisch die erfindungsgemäße Härtemeßeinrichtung dargestellt, die Teil der erfindungsgemäßen Vorrichtung sein kann.

Auf einem Maschinengestell 25 ist bei 26 verschiebbar gelagert eine Rinne 27 angeordnet. Diese Rinne kann in Richtung des Doppelpfeiles 28 in Längsrichtung hin- und herbewegt werden. Pellets werden dabei von links her in Richtung des Pfeiles 29 auf die Rinne aufgebracht und rutschen allmählich in Folge der Hin- und Herbewegung der Rinne 27 nach rechts, bis sie in eine Kerbe 30 fallen. Nach einiger Zeit wird dann die Hin- und Herbewegung der Rinne 27 unterbrochen und es wird mit Langsam anwachsender Kraft ein ebenfalls am Maschinengestell 25 in im wesentlichen senkrechter Richtung hin- und herbewegbarer Stempel 31 auf das Pellet gedrückt, das in der Kerbe und auf einer darunter angeordneten Kraftdose 32 liegt. Mit wachsender Kraft des Stempels 31 gibt die Kraftmeßdose 32 ein Signal ab, das einer wachsenden Kraft entspricht, bis das Pellet zerbricht. Die kurz zuvor von der Kraftmeßdose noch gemessene Kraft ist dabei ein Maß für die Härte des Pellets.

Nachdem sich der Stempel 31 wieder in eine obere Stellung zurückgezogen hat, können die Reste des Pellets aus der Kerbe 30 mit Hilfe einer Düse 33 entfernt werden, durch die Druckluft geleitet wird. Anschließend kann die Hin- und Herbewegung der Rinne 27 erneut beginnen, so daß die Härte eines weiteren Pellets bestimmt werden kann.

Bei der in Fig. 3 dargestellten Ausführungsform ist die Kerbe 30 eine durchgehende Ausnehmung. Es ist jedoch auch möglich, nur eine nicht durch die Rinne 27 hindurchgehende Kerbe an deren oberer Oberfläche vorzusehen. Die Rinne 27 muß in diesem Falle beweglich gelagert werden. Die Kraft des Stempels 31 auf das Pellet wird dabei durch die Kraftmeßeinrichtung 32 indirekt gemessen, indem die durch Druck auf das Pellet erhöhte Druckkraft der Rinne 27 auf die Kraftmeßeinrichtung 32 bestimmt wird.

**Patentansprüche**

1. Vorrichtung zum Messen der Qualität von Pellets mit einer Kammer, mit einem Hohlraum zum Aufnehmen des zu untersuchenden Materials und mit einem Antrieb, der Kammer und Hohlraum derart bewegt, daß ein Abrieb der Pellets verursacht wird, dadurch gekennzeichnet, daß die Kammer (13) mit die Bewegung des Materials in einer Längsrichtung der Kammer (13) hemmenden Zwischenwänden (14) und mit Einrichtungen (22) zum Einbringen eines Pelletstroms durch eine in Längsrichtung vordere Öffnung der Kammer (13) und zum Abgeben des Pelletstroms durch eine hintere Öffnung versehen ist, und daß Einrichtungen (16, 17, 18, 19) zum Aussieben und Wegleiten der mehl- oder pulverförmigen Komponente des Pelletstroms vor bzw. im Bereich der vorderen Öffnung der Kammer (13) und hinter bzw. im Bereich der hinteren Öffnung der Kammer (13), und Einrichtungen (4, 6) zur laufenden Mengenbestimmung des aus der Kammer (13) abgegebenen von der mehl- oder pulverförmigen Komponente befreiten Pelletstroms und der hinter bzw. im Bereich der hinteren Öffnung der Kammer (13) ausgesiebten und weggeleiteten mehl- oder pulverförmigen Komponente, die durch Abrieb entstanden ist, vorgesehen sind.

2. Vorrichtung nach Anspruch 1, dadurch gekennzeichnet, daß sie mit einer Einrichtung (1) zum Bestimmen der Temperatur der Pellets versehen ist.

3. Vorrichtung nach Anspruch 1 oder 2, dadurch gekennzeichnet, daß sie mit einer Einrichtung (1) zum Bestimmen der Feuchtigkeit der Pellets versehen ist.

4. Vorrichtung nach Anspruch 2 oder 3, dadurch gekennzeichnet, daß die Einrichtung (1) zum Bestimmen von Temperatur und/oder Feuchtigkeit in Strömungsrichtung vor der Kammer (13) angeordnet ist.

5. Vorrichtung nach einem der Ansprüche 1 bis 4, dadurch gekennzeichnet, daß die Kammer (13) um eine sich in ihrer Längsrichtung erstreckende Achse drehbar ist.

6. Vorrichtung nach Anspruch 5, dadurch gekennzeichnet, daß die Achse vom Bereich der vorderen Öffnung zum Bereich der hinteren Öffnung nach unten geneigt ist.

7. Vorrichtung nach einem der Ansprüche 1 bis 6, dadurch gekennzeichnet, daß der Hohlraum der Kammer (13) mit Vorsprüngen (15) zur Vergrößerung des Abriebs der Pellets bei der Bewegung der Kammer (13) versehen ist.

8. Vorrichtung nach Anspruch 6 oder 7, dadurch gekennzeichnet, daß die Kammer (13) aus mehreren hintereinander angeordneten und miteinander verbundenen Einzelkammern besteht.

9. Vorrichtung nach einem der Ansprüche 1 bis 8, dadurch gekennzeichnet, daß sie eine automatische Härtemeßeinrichtung (5) für aus dem Pelletstrom ausgesonderte Einzelpellets aufweist.

10. Vorrichtung nach Anspruch 9, dadurch gekennzeichnet, daß die Härtemeßeinrichtung (5) hinter der Abriebmeßeinrichtung (2) angeordnet ist.

11. Vorrichtung nach Anspruch 9 oder 10, dadurch gekennzeichnet, daß die Härtemeßeinrichtung (5) eine hin- und herbewegbare Rinne (27) für die Pellets, die mit einer Kerbe (30) zum Festhalten eines einzelnen Pellets versehen ist, einen Preßstempel (31) oberhalb und eine Kraftmeßeinrichtung (32) unterhalb der Rinne (27) im Bereich der Kerbe (30) aufweist.

12. Vorrichtung nach Anspruch 11, dadurch gekennzeichnet, daß die Kraftmeßeinrichtung (32) eine Kraftmeßdose ist.

13. Vorrichtung nach Anspruch 11 oder 12, dadurch gekennzeichnet, daß pneumatische Einrichtungen (33) zum Beseitigen der zerdrückten Pellets aus der Kerbe (30) vorgesehen sind.

14. Vorrichtung nach einem der Ansprüche 1 bis 13, dadurch gekennzeichnet, daß Einrichtungen (10) zum automatischen Auswerten der Meßwerte und zum Berechnen von Mittelwerten vorgesehen sind.

15. Vorrichtung nach Anspruch 24, dadurch gekennzeichnet, daß sie Einrichtungen zum Ausdrucken, Anzeigen und/oder Aufzeichnen der Meßdaten aufweist.

16. Vorrichtung nach Anspruch 15, dadurch gekennzeichnet, daß die Anordnung so getroffen ist, daß gleichzeitig die Daten von gleichzeitig in die Vorrichtung eingebrachten Pellets ausgedruckt, angezeigt und/oder aufgezeichnet werden.

17. Vorrichtung nach Anspruch 15 oder 16, dadurch gekennzeichnet, daß sie Speichereinrichtungen für die Daten aufweist.

**Claims**

1. An apparatus for determining the quality of pellets, comprising a chamber having a cavity for accommodating the material to be tested and a drive means which imparts motion to the chamber and cavity in such a way that the pellets are subjected to abrasion, characterised in that the chamber (13) is provided with partition walls (14) impeding movement of the material in a longitudinal direction of the chamber (13) and with means (22) for introducing a stream of pellets through a front opening in the longitudinal direction of the chamber (13) and for discharging the stream of pellets through a rear opening, and in that means (16, 17, 18, 19) are provided for sifting out and removing the flour-like or powdery component of the stream of pellets in front of and/or in the vicinity of the front opening of the chamber (13) and behind and/or in the vicinity of the rear opening of the chamber (13), and means (4, 6) for the continuous quantity determination of the stream of pellets freed of the flour-like or powdery component and discharged from the chamber (13), and of the flour-like or powdery component sifted out and removed behind and/or in the vicinity of the rear opening of the chamber (13) resulting from abrasion.

2. An apparatus according to Claim 1, characterised in that it is provided with a device (1) for determining the temperature of the pellets.

3. An apparatus according to Claim 1 or 2, characterised in that it is provided with a device (1) for determining the moisture content of the pellets.

4. An apparatus according to Claim 2 or 3, characterised in that the device (1) for determining temperature and/or moisture content is disposed in flow direction upstream of the chamber (13).

5. An apparatus according to any of Claims 1 to 4, characterised in that the chamber (13) is rotatable about an axis extending in its longitudinal direction.

6. An apparatus according to Claim 5, characterised in that the axis is inclined downwards from the region of the front opening to the region of the rear opening.

7. An apparatus according to any of Claims 1 to 6, characterised in that the cavity of the chamber (13) is provided with projections (15) for increasing the abrasion of the pellets during the movement of the chamber (13).

8. An apparatus according to Claim 6 or 7, characterised in that the chamber (13) comprises a plurality of compartments arranged in succession and connected with one another.

9. An apparatus according to any of Claims 1 to 8, characterised in that it has an automatic hardness measuring device (5) for individual pellets selected from the stream of pellets.

10. An apparatus according to Claim 9, characterised in that the hardness measuring device (5) is disposed downstream of the abrasion measuring device (2).

11. An apparatus according to Claim 9 or 10, characterised in that the hardness measuring device (5) has a channel (27) for the pellets, to which reciprocating motion can be imparted and which is provided with a groove (30) for retaining a single pellet, and above the channel (27) in the vicinity of the groove (30) has a press ram (31) and below it a force-measuring device (32).

12. An apparatus according to Claim 11, characterised in that the force-measuring device (32) is a pressure meter.

13. An apparatus according to Claim 11 or 12, characterised in that pneumatic means (33) are provided for removing the crushed pellets from the groove (30).

14. An apparatus according to any of Claims 1 to 13, characterised in that means (10) are provided for automatically evaluating the measured values and for calculating mean values.

15. An apparatus according to Claim 14, characterised in that is has means for printing out, displaying and/or recording the measurement data.

16. An apparatus according to Claim 15, characterised in that the arrangement is such that the data in respect of pellets simultaneously introduced into the apparatus are simultaneously printed out, displayed and/or recorded.

17. An apparatus according to Claim 15 or 16, characterised in that it has means for storing the data.

## Revendications

1. Dispositif de mesure de la qualité de boulettes ou pastilles, comprenant une chambre, une cavité destinée à recevoir la matière à contrôler et un mécanisme de commande qui imprime un mouvement à la chambre et à la cavité, de manière à provoquer une usure par frottement des pastilles, caractérisé en ce que la chambre (13) est munie de cloisons (14), qui ralentissent le mouvement de la matière dans la direction longitudinale de la chambre (13), et de dispositifs (22) pour l'introduction d'un courant de pastilles à travers une ouverture amont (en direction longitudinale) de la chambre (13) et pour la sortie du courant de pastilles à travers une ouverture aval, et en ce qu'il est prévu des dispositifs (16, 17, 18, 19) pour séparer par tamisage et évacuer la partie constituante du courant de pastilles à l'état de farine ou de poudre, en amont ou au niveau de l'ouverture amont de la chambre (13) et en aval ou au niveau de l'ouverture aval de la chambre (13), ainsi que des dispositifs (4, 6) pour déterminer en continu la quantité du courant de pastilles, débarrassé de sa partie constituante à l'état de farine ou de poudre, qui sort de la chambre (13), et la quantité de la partie constituante à l'état de farine ou de poudre qui résulte de l'usure par frottement et qui est séparée par tamisage et évacuée en aval ou au niveau de l'ouverture aval de la chambre (13).

2. Dispositif selon la revendication 1, caractérisé en ce qu'il est muni d'un dispositif (1) pour la détermination de la température des pastilles.

3. Dispositif selon la revendication 1 ou 2, caractérisé en ce qu'il est muni d'un dispositif (1) pour la détermination de l'humidité des pastilles.

4. Dispositif selon la revendication 2 ou 3, caractérisé en ce que le dispositif pour la détermination de la température et/ou de l'humidité est disposé en amont de la chambre (13) dans la direction du courant.

5. Dispositif selon l'une quelconque des revendications 1 à 4, caractérisé en ce que la chambre (13) peut tourner autour d'un axe qui s'étend dans sa direction longitudinale.

6. Dispositif selon la revendication 5, caractérisé en ce que l'axe est incliné vers le bas depuis la région de l'ouverture amont vers la région de l'ouverture aval.

7. Dispositif selon l'une quelconque des revendications 1 à 6, caractérisé en ce que la cavité de la chambre (13) est garnie de saillies (15) destinées à accroître l'usure par frottement des pastilles lors du mouvement de la chambre (13).

8. Dispositif selon la revendication 6 ou 7, caractérisé en ce que la chambre (13) est composée de plusieurs chambres individuelles, disposées à la suite les unes des autres et communiquant entre elles.

9. Dispositif selon l'une quelconque des revendications 1 à 8, caractérisé en ce qu'il comporte un dispositif de mesure automatique de dureté (5) pour des pastilles individuelles prélevées sur le courant de pastilles.

10. Dispositif selon la revendication 9, caractérisé en ce que le dispositif de mesure de dureté (5) est disposé en aval du dispositif de mesure d'usure par frottement (2).

11. Dispositif selon la revendication 9 ou 10, caractérisé en ce que le dispositif de mesure de dureté (5) comporte une gouttière (27) pour les pastilles, animée d'un mouvement de va-et-vient et munie d'une entaille (30) destinée à retenir une pastille individuelle, un piston presseur (31) au-dessus de la gouttière (27) et un dispositif dynamométrique (32) au-dessous de celle-ci dans la région de l'entaille (30).

12. Dispositif selon la revendication 11, caractérisé en ce que le dispositif dynamométrique (32) est une boîte dynamométrique.

13. Dispositif selon la revendication 11 ou 12, caractérisé en ce qu'il est prévu des dispositifs pneumatiques (33) pour débarrasser l'entaille (30) des débris de la pastille écrasée.

14. Dispositif selon l'une quelconque des revendications 1 à 13, caractérisé en ce qu'il est prévu des dispositifs (10) pour l'exploitation automatique des valeurs de mesure et pour le calcul de valeurs moyennes.

15. Dispositif selon la revendication 14, caractérisé en ce qu'il comporte des dispositifs pour l'impression, l'affichage et/ou l'enregistrement des données de mesure.

16. Dispositif selon la revendication 15, caractérisé en ce que des dispositions sont prises pour que les données relatives à des pastilles introduites en même temps dans le dispositif soient imprimées, affichées et/ou enregistrées simultanément.

17. Dispositif selon la revendication 15 ou 16, caractérisé en ce qu'il comporte des dispositifs de mémoire pour les données.

## Fig.1

Pellets

| 1 Temp. Feuchte | → | 2 Abrieb |

Mehl 3

Mehl

Pellets

5 Härte

4 Menge Mehl — 7

6 Menge Pellets — 8

9 Verhältnis

10 Auswertung , Anzeige

Steuerung — 40

# Fig. 2

# Fig. 3